(19) Europäisches Patentamt
European Patent Office
Office européen des brevets

(11) EP 1 611 172 B1

(12) **FASCICULE DE BREVET EUROPEEN**

(45) Date de publication et mention de la délivrance du brevet:
**02.05.2007 Bulletin 2007/18**

(21) Numéro de dépôt: **04724039.5**

(22) Date de dépôt: **29.03.2004**

(51) Int Cl.:
***C08F 112/12*** *(2006.01)* ***C08F 4/48*** *(2006.01)*

(86) Numéro de dépôt international:
**PCT/FR2004/050129**

(87) Numéro de publication internationale:
**WO 2004/090001 (21.10.2004 Gazette 2004/43)**

# (54) PROCEDE DE PREPARATION DE POLY (a-METHYLSTYRENE)

PROZESS ZUR HERSTELLUNG VON POLY (ALPHA-METHYLSTYROL)

METHOD FOR THE PREPARATION OF POLY (A)-METHYLSTYRENE

(84) Etats contractants désignés:
**AT BE BG CH CY CZ DE DK EE ES FI FR GB GR HU IE IT LI LU MC NL PL PT RO SE SI SK TR**

(30) Priorité: **31.03.2003 FR 0350081**

(43) Date de publication de la demande:
**04.01.2006 Bulletin 2006/01**

(73) Titulaire: **COMMISSARIAT A L'ENERGIE ATOMIQUE**
**75015 Paris (FR)**

(72) Inventeurs:
- **BALLAND-LONGEAU, Alexia**
**F-37000 TOURS (FR)**
- **CALONNE, Marc**
**F-37800 Drache (FR)**
- **JOUSSE, Franck**
**F-33600 PESSAC (FR)**
- **CATALA, Jean-Marie**
**F-67450 MUNDOLSHEIM (FR)**

(74) Mandataire: **Poulin, Gérard et al**
**Brevatome**
**3, rue du Docteur Lancereaux**
**75008 Paris (FR)**

(56) Documents cités:
**DE-B- 1 225 866**
**GB-A- 850 909**
**GB-A- 1 076 897**

EP 1 611 172 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

### DOMAINE TECHNIQUE

La présente invention se rapporte à un nouveau procédé de préparation de poly(α-méthylstyrène).

Le poly(α-méthylstyrène) est un polymère thermoplastique qui trouve son application dans de nombreux domaines, en particulier dans le domaine de l'élaboration des matériaux destinés à des expériences de fusion par confinement inertiel, dans le domaine de l'élaboration de surface de dépôt ou de mandrin dépolymérisable.

### ETAT DE LA TECHNIQUE ANTERIEURE

Classiquement, le poly(α-méthylstyrène) (intitulé PAMS dans la suite de cette description) est préparé par polymérisation anionique du monomère α-méthylstyrène.

De façon générale, la polymérisation anionique correspond à une polymérisation en chaîne au cours de laquelle des monomères s'additionnent sur une chaîne présentant en extrémité une espèce anionique associée à une espèce cationique. La particularité de cette polymérisation réside dans la possibilité de préparer des polymères sans les réactions secondaires observées habituellement en polymérisation radicalaire classique, à savoir les réactions de transfert et de terminaison, intervenant au cours de l'étape de propagation d'une polymérisation radicalaire classique.

Dès 1959, les auteurs Cormick et al dans l'article 'Molecular Weight Distribution of Anionically Polymerized α-Methylstyrène' dans Journal of Polymer Science, Vol.XLI, p 327-331(1959) [1] ont décrit un procédé de préparation du PAMS par polymérisation anionique comprenant les étapes suivantes :

- une étape d'initiation consistant à additionner dans une solution contenant le monomère α-méthylstyrène et du tétrahydrofuranne un amorceur bifonctionnel du type complexe naphtalène sodium ;
- une étape de propagation engendrée par le refroidissement de la solution résultant de la précédente étape à une température inférieure à 0°C ;
- une étape de terminaison par addition d'eau et de méthanol.

Toutefois, la mise en oeuvre de ce procédé présente l'inconvénient d'engendrer des polymères à indice de polydispersité élevé (pouvant aller jusqu'à 1,5), et à masse molaires relativement faibles.

Les auteurs Tsunashima et al. dans l'article 'On the anionic Preparation of Poly(α-méthylstyrène)' dans Bull.Inst.Chem.Res., Kyoto Univ., Vol.46, N°2, 1968 [2] prososent un procédé de polymérisation anionique du monomère α-méthylstyrène dans le tétrahydrofuranne, mais cette fois-ci en présence d'un amorceur monofonctionnel (c'est-à-dire possédant un seul centre actif), plus précisément en présence de butyllithium. Dans ce procédé, la vitesse de l'étape de propagation est extrêmement élevée par rapport à celle de l'étape d'amorçage, ce qui a pour effet d'augmenter l'indice de polydispersité, dans la mesure où l'amorçage ne s'effectue pas au même moment pour l'ensemble des chaînes de polymère.

Selon une toute autre démarche, les auteurs Abe et al dans l'article 'Dilute Solution Properties of Monodisperse Poly(α-méthylstyrene)' dans Bulletin of the Chemical Society of Japan, vol 41, 2330-2336 (1968) [3] ont proposé un procédé de préparation de PAMS par polymérisation anionique de l'(α-méthylstyrène) dans le THF en présence d'un amorceur particulier, constitué par un complexe de naphtalène sodium. Ce procédé conduit à un échantillon de polymères présentant des masses molaires inhomogènes. Pour atténuer l'inhomogénéité de l'échantillon, les auteurs susmentionnés proposent de fragmenter l'échantillon en polymères de masses molaires proches les unes des autres, en soumettant cet échantillon à un traitement dans un appareillage complexe intitulé 'colonne de Desreux'.

Ce procédé nécessite, comme il ressort du paragraphe ci-dessus, après polymérisation, une étape de fragmentation complexe et de ce fait, rend ce procédé difficilement transposable à grande échelle.

Ainsi, les procédés de préparation de poly(α-méthylstyrène) de l'art antérieur présentent tous l'un ou plusieurs des inconvénients suivants :

- du fait d'une étape de propagation se déroulant à une vitesse supérieure à celle de l'étape d'amorçage, ils conduisent généralement à des polymères inhomogènes en longueur de chaîne, c'est-à-dire à des polymères présentant un indice de polydispersité supérieure à 1,1 ;
- ils sont difficiles à mettre en oeuvre, car ils impliquent, pour certains, une étape de fragmentation destinée à diminuer l'inhomogénéité d'un échantillon de polymères ;
- ils ne permettent pas à la fois un contrôle de l'indice de polydispersité et de la masse molaire des polymères obtenus.

Le but de la présente invention est de proposer un procédé de préparation de PAMS, qui permette l'obtention d'un PAMS avec un contrôle à la fois de l'indice de polydispersité et de la masse molaire dudit polymère, et qui ne

présente pas les inconvénients des procédés décrits dans l'art antérieur.

Le but de la présente invention est de proposer un procédé de préparation de PAMS, qui soit de mise en oeuvre simple et de coût peu élevé.

## EXPOSÉ DE L'INVENTION

Ce but et d'autres encore sont atteints par la présente invention, qui consiste en un procédé de préparation d'un polymère poly($\alpha$-méthylstyrène) par polymérisation anionique du monomère $\alpha$-méthylstyrène, ledit procédé comprenant successivement les étapes suivantes :

a) une étape de préparation d'une solution comprenant le monomère $\alpha$-méthylstyrène et un solvant apolaire aprotique ;
b) une étape de neutralisation de la solution préparée en a) comprenant l'ajout à cette solution d'un quantité efficace d'au moins un amorceur organométallique monofonctionnel, de manière à neutraliser les sources protiques de la solution préparée en a);
c) une étape de refroidissement de la solution obtenue en b) à une température inférieure à 0°C ;
d) une étape d'amorçage de la polymérisation comprenant l'ajout à la solution refroidie obtenue en c) d'une quantité prédéterminée dudit amorceur organométallique monofonctionnel ;
e) une étape de propagation de la polymérisation comprenant l'addition à la solution obtenue en d) d'un solvant polaire aprotique, ledit solvant polaire aprotique étant ajouté en une quantité inférieure à celle du solvant apolaire aprotique;
f) une étape de terminaison comprenant l'ajout à la solution obtenue en e) d'un solvant polaire protique.

Ainsi, le procédé comporte une première étape de préparation d'une solution comprenant le monomère $\alpha$-méthylstyrène et un solvant apolaire aprotique. Cette étape de préparation consiste à ajouter, de préférence sous agitation et à température ambiante à un solvant apolaire aprotique le monomère $\alpha$-méthylstyrène ou vice-versa.

De préférence, le solvant apolaire aprotique utilisé dans cette étape est un solvant présentant un constante diélectrique inférieure à 4.

Des solvants particulièrement avantageux répondant à ce critère peuvent être des hydrocarbures aromatiques comprenant de 6 à 10 atomes de carbone, tels que le toluène, le benzène ou des hydrocarbures aliphatiques.

De préférence, le solvant apolaire aprotique utilisé dans cette étape est le toluène.

Le procédé de l'invention comprend également une étape de neutralisation b) destinée à éliminer toute source protique présente dans la solution préparée lors de l'étape a). Cette étape de neutralisation consiste dans le cadre de ce procédé à ajouter à la solution préparée lors de l'étape a) un amorceur organométallique monofonctionnel, c'est-à-dire une molécule apte à assurer grâce à la présence d'un unique centre actif ou fonction réactive, la création d'anions à partir du monomère lors de l'étape d'amorçage subséquente. Ce type d'amorceur peut être également intitulé amorceur à site unique (correspondant à la terminomogie anglo-saxonne 'single-site initiator'). Lors de l'étape de neutralisation, l'amorceur susmentionné a pour rôle de capter les protons présents dans la solution. Concrètement, l'ajout, de préférence, en goutte en goutte, de l'amorceur monofonctionnel en vue de neutraliser la solution préparée en a) s'accompagne d'un changement de couleur de ladite solution et d'une stabilisation de ladite couleur, lorsque la neutralisation est achevée. L'avancement de l'étape de neutralisation peut être suivi par mesure de l'absorbance de la solution, dans laquelle on additionne l'amorceur monofonctionnel, ladite addition étant maintenue jusqu'à obtention d'une solution présentant une absorbance sensiblement constante en fonction du temps.

De préférence, l'avancement de l'étape de neutralisation est suivi au moyen d'une cellule UV. Cette cellule UV permettra avantageusement de mesurer avec précision le suivi de l'évolution de l'absorbance lors de l'ajout de l'amorceur monofonctionnel et de stopper cet ajout dès lors que l'on constate une absorbance sensiblement constante en fonction du temps. De préférence, l'étape de préparation a) et l'étape de neutralisation b) sont réalisées à température ambiante.

Une fois l'étape de neutralisation achevée, le procédé de l'invention comprend également une étape de refroidissement de la solution obtenue en b) à une température inférieure ou égale à 0°C.

De préférence, l'étape de refroidissement consiste à refroidir la solution obtenue en b) à une température allant de -50 à -10°C, encore plus préférentiellement, allant de -50 à -25°C.

L'utilisation d'une telle gamme de température contribue avantageusement à stabiliser les carbanions qui se formeront lors de l'étape d'amorçage subséquente.

Dans la mesure où il s'agit d'un procédé de polymérisation anionique, le procédé de l'invention comprend également une étape d'amorçage, c'est-à-dire une étape consistant à transformer le monomère ($\alpha$-méthylstyrène) en centre actif anionique. Plus précisément, cette étape d'amorçage, dans le cadre de l'invention, consiste à ajouter à la solution obtenue à l'issue de l'étape b) une quantité prédéterminée de l'amorceur organométallique monofonctionnel susmentionné (utilisé lors de l'étape de neutralisation), c'est-à-dire la quantité nécessaire d'amorceur pour créer des

monomères activés destinés à réagir au cours de la réaction de polymérisation pour donner un polymère à masse molaire donnée.

L'originalité de cette étape réside dans le fait, qu'elle est réalisée dans un solvant apolaire aprotique.

Lors de l'étape d'amorçage, le monomère (α-méthylstyrène) est activé par réaction avec l'amorceur monofonctionnel (symbolisé par AB ci-dessus) selon la réaction suivante :

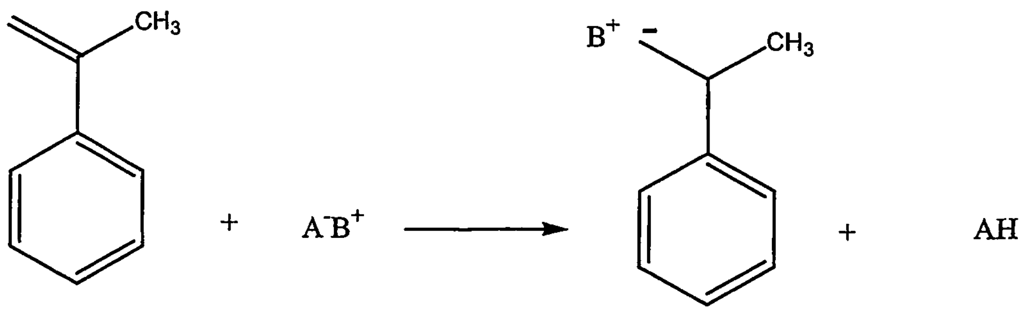

Dans la mesure où l'étape d'amorçage s'effectue dans un solvant apolaire aprotique, le monomère activé se retrouve sous la forme d'une paire d'ions non dissociés du fait du pouvoir non dissociant du solvant. Par conséquent, dans la mesure où le monomère activé existe sous forme de paire d'ions, il ne peut pas réagir avec les autres monomères activés présents en solution et l'étape de propagation ne peut ainsi pas démarrer.

De plus, le fait d'utiliser un amorceur organométallique monofonctionnel a pour conséquence que, lors de l'étape de propagation, il n'y aura propagation des chaînes de polymère qu'à une seule extrémité, d'où la formation de polymères à faible dispersion dans les masses moléculaires et par conséquent un faible indice de polydispersité.

De préférence, l'amorceur organométallique monofonctionnel est un composé organolithien. Plus précisément, ce composé organolithien peut être choisi dans le groupe constitué par le n-butyllithium, le sec-butyllithium, le tert-butyllithium.

Enfin, l'étape de propagation du procédé de l'invention comprend l'addition à la solution préparée en c) d'un solvant polaire aprotique en une quantité inférieure à celle du solvant apolaire aprotique. De préférence, la quantité de solvant polaire aprotique correspond à moins de 10 % en volume du volume total de solvant (solvant apolaire aprotique + solvant polaire aprotique).

Ainsi, en ajoutant un solvant polaire aprotique en quantité inférieure à celle du solvant apolaire aprotique, on assure la dissociation des paires d'ions (ce qui permet le démarrage de la propagation) en limitant la vitesse de propagation, laquelle engendrerait, si elle était trop rapide, une augmentation considérable de l'indice de polydispersité, ce qui n'est pas le but recherché.

On précise que, selon l'invention, dans ce qui précède et ce qui suit, on entend par solvant polaire aprotique un solvant présentant avantageusement une constante diélectrique supérieure à 13.

Il est entendu que ce solvant devra être parfaitement miscible dans le solvant apolaire aprotique utilisé pour l'étape de préparation a) susmentionnée et devra être utilisable à basse température, par exemple à des températures s'échelonnant entre -25 et -50°C.

Des solvants particulièrement avantageux répondant à ces critères peuvent être choisis dans le groupe constitué par le tétrahydrofuranne, le tétrahydropyranne.

L'originalité de cette étape réside dans le fait d'ajouter un solvant polaire aprotique à la solution résultant de l'étape d'amorçage, cette solution contenant uniquement des paires d'ions non dissociées. L'ajout de ce solvant dissocie de manière simultanée les paires d'ions et libèrent ainsi les monomères activés, qui vont pouvoir ainsi réagir entre eux pour former le polymère adéquat. L'ajout de ce solvant donne ainsi le point de départ de l'étape de propagation et de ce fait, contribue à ce que la propagation de la polymérisation s'effectue de manière quasi simultanée à partir de chacun des monomères activés et permet, en conséquence, d'obtenir, à l'issue de cette étape, un échantillon de polymères très homogène, c'est-à-dire un échantillon constitué de polymères présentant des masses molaires en nombre très proches les unes des autres.

Ceci n'est pas le cas des procédés décrits dans l'art antérieur, où l'étape de propagation démarre avant même que l'étape d'amorçage ne soit achevée, ce qui a pour conséquence d'engendrer des échantillons inhomogènes, c'est-à-dire un échantillon constitué de polymères présentant des masses molaires très variées, soit un indice de polydispersité élevé.

De préférence, l'étape de préparation a), l'étape de neutralisation b), l'étape d'amorçage d) et l'étape de propagation sont réalisées sous une atmosphère de gaz inerte.

On précise que, par gaz inerte, on entend un gaz constitué d'éléments chimiquement inactifs. Ce gaz peut être

de l'argon, de l'hélium, de l'azote.

Le procédé comprend également une étape de terminaison comprenant l'ajout à la solution préparée en d) d'un solvant polaire protique tel qu'un alcool anhydre (éthanol, hexanol). Cette étape intervient lorsque les monomères ont été complètement consommés pour entrer dans la constitution du PAMS. La fin de l'étape de propagation peut être située grâce à une étude cinétique réalisée préalablement à la mise en oeuvre du procédé, le but de cette étude cinétique étant de suivre la consommation en monomère en fonction du temps et de suivre la linéarité des masses molaires obtenues en fonction du rendement. Il est entendu que cette étude cinétique est tout à fait à la portée de l'homme du métier. De préférence, la solution obtenue en f) est ramenée à température ambiante.

Enfin le procédé de l'invention peut comprendre, en outre, après l'étape de terminaison, une étape d'isolement du poly($\alpha$-méthylstyrène). Cette étape d'isolement est réalisée par exemple par coulée du mélange réactionnel résultant de l'étape f) dans du méthanol, suivie d'une filtration et d'un séchage du poly($\alpha$-méthylstyrène) obtenu.

En pratique, le procédé de l'invention peut être mis en oeuvre de la manière décrite ci-dessous.

Dans un réacteur spécifique, présentant un volume de 100 à 1500 mL, de préférence relié à un cryostat et à une cellule UV, on introduit, de préférence sous agitation et sous atmosphère de gaz inerte le solvant apolaire aprotique et le monomère $\alpha$-méthylstyrène. De préférence, le solvant utilisé est préalablement purifié par distillation sous atmosphère inerte et sur desséchant (tel que le sodium). Ensuite, l'étape de neutralisation est réalisée en ajoutant l'amorceur organométallique monofonctionnel au mélange précédent, de préférence à température ambiante. L'ajout s'effectue préférablement de manière très lente, par exemple, par goutte-à-goutte, alors que parallèlement la cellule UV détermine l'absorbance de la solution en fonction du temps. Une fois la neutralisation atteinte, une très légère coloration jaune est obtenue et la solution présente une valeur d'absorbance sensiblement constante en fonction du temps. Ensuite, la température du mélange est abaissée, par exemple, entre -50 et -25°C puis on ajoute la quantité théorique d'amorceur organométallique monofonctionnel nécessaire à l'obtention d'un polymère à masses molaires en nombre souhaité , de préférence élevées. On agite le mélange à la température fixée précédemment pendant une durée pouvant s'échelonner de 1 à 8 heures. L'achèvement de l'étape d'amorçage peut être détecté également par cellule UV, cet achèvement se traduisant par une solution présentant une absorbance sensiblement constante en fonction du temps.

Une fois l'étape d'amorçage achevée, on ajoute une quantité donnée de solvant polaire aprotique avantageusement préalablement purifié par distillation, par exemple sous argon et sur desséchant, le volume de solvant polaire aprotique ajouté étant inférieur à celui du solvant apolaire aprotique, le solvant polaire aprotique représentant, de préférence, moins de 10% en volume par rapport au volume de solvant (solvant apolaire aprotique + solvant polaire aprotique). La solution vire au rouge. L'étape de propagation est effectuée de préférence, sous agitation à une température s'échelonnant de préférence, de -50 à -25°C pendant une durée, par exemple de 3 à 50 heures de manière à former le polymère souhaité. Enfin, le procédé de polymérisation est achevé par une étape de terminaison par ajout d'un solvant polaire protique tel qu'un alcool anhydre (éthanol, hexanol). Le mélange réactionnel est ensuite ramené, de préférence, à température ambiante et le polymère obtenu est alors isolé par précipitation dans du méthanol puis par filtration suivie d'un séchage.

Ainsi, le procédé de préparation de PAMS selon l'invention présente les avantages suivants :

- grâce à la séparation des étapes d'amorçage et de propagation, en raison de l'emploi judicieux de deux catégories de solvant pour réaliser ces étapes, ce procédé permet d'obtenir un contrôle précis de ces étapes ;
- grâce au contrôle précis des étapes susmentionnées, le procédé de l'invention permet un contrôle à la fois de l'indice de polydispersité et de la masse molaire du polymère obtenu et permet l'accès à des polymères présentant un indice de polydispersité (inférieur à 1,1) et des masses molaires élevées (supérieures à 300 000 $g.mol^{-1}$ par rapport à un étalonnage avec des polystyrènes standards) ;
- grâce au contrôle des différentes étapes entrant en jeu dans ce procédé, on accède ainsi à un procédé parfaitement reproductible ;
- grâce au contrôle desdites étapes, il permet de préparer des lots de masse supérieure à 200 g, si souhaitée.

L'invention va maintenant être décrite au regard des exemples particuliers suivants, qui sont donnés, à titre illustratif et non limitatif.

## EXPOSÉ DÉTAILLÉ DE MODES DE RÉALISATION PARTICULIERS

Les exemples qui vont suivre illustrent la préparation de polymères conformes à la présente invention.

Dans chacun de ces exemples, il a été mesuré la masse molaire en nombre et l'indice de polydispersité.

Les masses molaires en nombre et l'indice de polydispersité ont été déterminées par chromatographie d'exclusion stérique. La chromatographie d'exclusion stérique est basée sur le principe de la chromatographie liquide. Dans le cadre de ces exemples, le solvant d'élution correspond à du THF et le dispositif chromatographique comprend quatre colonnes montées en série et équipé d'un détecteur réfractométrique (Waters). L'étalonnage est réalisé à partir de

polystyrènes standards.

La masse molaire en nombre Mn correspond à la somme de toutes les masses pondérées par la fraction en nombre.

La masse molaire en poids Mw correspond à la somme de toutes les masses pondérées par un coefficient wi, qui représente la fraction en poids des espèces présentes (Ewi=1).

L'indice de polydispersité Ip correspond au rapport de la masse molaire en poids sur la masse molaire en nombre et caractérise la dispersion des masses autour de la masse moyenne.

Dans chacun de ses exemples, la quantité d'amorceur n à ajouter pour la propagation de la polymérisation est prédéterminée par la méthode suivante.

On considère que l'on veut préparer un polymère de masse molaire moyenne en nombre, notée 'Mn théorique'. Après une étude cinétique préalable, on considère un rendement de polymérisation R.

La formule de détermination de la quantité prédéterminée d'amorceur à ajouter est la suivante :

$$n=(m/Mn\ \text{théorique})*R$$

dans laquelle :

- n correspond à la quantité prédéterminée d'amorceur, exprimée en moles ;
- m correspond à la masse de monomère à introduire pour obtenir un polymère de masse Mn théorique souhaitée, exprimée en g ;
- Mn théorique correspond à la masse molaire en nombre souhaitée du polymère, exprimée en $g.mol^{-1}$ ;
- R correspond au rendement de polymérisation, évaluée grâce à une étude cinétique préalable.

EXEMPLE 1.

Cet exemple illustre la préparation de poly($\alpha$-méthylstyrène) ayant une masse molaire en nombre de 312000 $g.mol^{-1}$ et un indice de polydispersité proche de 1.

Dans un réacteur spécifique de 100 mL relié à un cryostat équipé d'une cellule UV, sont introduits sous argon, du toluène anhydre (55 mL) et le monomère $\alpha$-méthylstyrène (22 g). La phase de neutralisation suivie grâce à la cellule UV est alors effectuée à température ambiante en ajoutant goutte à goutte du s-BuLi. Lorsque la neutralisation est atteinte, une légère coloration jaune est obtenue et l'absorption UV est stable. Le milieu réactionnel est alors placé à -25°C. La quantité prédéterminée de s-BuLi ($7{,}3*10^{-5}$ mol) nécessaire à l'obtention du polymère visé est ajoutée. Pour déterminer cette quantité prédéterminée, un rendement quantitatif est considéré.

Après agitation à cette température pendant 4 heures, le solvant polaire aprotique, le tétrahydrofuranne anhydre (10 mL) est additionné. Le milieu réactionnel devient alors rouge intense. Après agitation pendant 24 heures à -25°C, la solution devient visqueuse. Après consommation totale du monomère, on stoppe la polymérisation en désactivant les sites anioniques, on ajoute 1 mL d'alcool anhydre à basse température et on laisse revenir le mélange à température ambiante. Le mélange est coulé lentement dans le méthanol. Le polymère obtenu est filtré et séché sous vide à environ 40°C. On obtient 20 g de poly($\alpha$-méthylstyrène), soit un rendement de 91%.

La masse molaire moyenne en nombre (Mn) est exprimée en équivalent polystyrène ;

- Masse molaire moyenne en nombre (Mn) (en $g.mol^{-1}$)= 312 000 ;
- Indice de polydispersité = 1,06.

EXEMPLE 2.

Cet exemple illustre la préparation de poly($\alpha$-méthylstyrène) ayant une masse molaire en nombre de 336 000 $g.mol^{-1}$ et un indice de polydispersité proche de 1.

Dans un réacteur spécifique de 700 mL relié à un cryostat équipé d'une cellule UV, sont introduits sous argon, du toluène anhydre (275 mL) et le monomère $\alpha$-méthylstyrène (110 g). La phase de neutralisation suivie grâce à la cellule UV est alors effectuée à température ambiante en ajoutant goutte à goutte du s-BuLi. Lorsque la neutralisation est atteinte, une légère coloration jaune est obtenue et l'absorption UV est stable. Le milieu réactionnel est alors placé à -25°C. La quantité théorique de s-BuLi ($3{,}2*10^{-4}$ mol) nécessaire à l'obtention du polymère visé est ajoutée. Après agitation à cette température pendant 8 heures, le solvant polaire aprotique, le tétrahydrofuranne anhydre (50 mL) est additionné. Le milieu réactionnel devient alors rouge intense. Après agitation pendant 24 heures à -25°C, la solution devient visqueuse. Après consommation totale du monomère, on stoppe la polymérisation en désactivant les sites

anioniques, on ajoute 3 mL d'alcool anhydre à basse température et on laisse revenir le mélange à température ambiante. Le mélange est coulé lentement dans le méthanol. Le polymère obtenu est filtré et séché sous vide à environ 40°C. On obtient 102 g de poly($\alpha$-méthylstyrène), soit un rendement de 93%.

La masse molaire moyenne en nombre (Mn) est exprimée en équivalent polystyrène.

- Masse molaire moyenne en nombre (Mn) (en $g.mol^{-1}$)= 336 000 ;
- Indice de polydispersité = 1,05.

EXEMPLE 3.

Cet exemple illustre la préparation de poly($\alpha$-méthylstyrène) ayant une masse molaire en nombre de 330 000 $g.mol^{-1}$ et un indice de polydispersité proche de 1.

Dans un réacteur spécifique de 700 mL relié à un cryostat équipé d'une cellule UV, sont introduits sous argon, du toluène anhydre (275 mL) et le monomère $\alpha$-méthylstyrène (110 g). La phase de neutralisation suivie grâce à la cellule UV est alors effectuée à température ambiante en ajoutant goutte à goutte du s-BuLi. Lorsque la neutralisation est atteinte, une légère coloration jaune est obtenue et l'absorption UV est stable. Le milieu réactionnel est alors placé à -25°C. La quantité théorique de s-BuLi ($3,2*10^{-4}$ mol) nécessaire à l'obtention du polymère visé est ajoutée. Après agitation à cette température pendant 8 heures, le solvant polaire aprotique, le tétrahydrofuranne anhydre (50 mL) est additionné. Le milieu réactionnel devient alors rouge intense. Après agitation pendant 24 heures à -25°C, la solution devient visqueuse. Après consommation totale du monomère, on stoppe la polymérisation en désactivant les sites anioniques, on ajoute 3 mL d'alcool anhydre à basse température et on laisse revenir le mélange à température ambiante. Le mélange est coulé lentement dans le méthanol. Le polymère obtenu est filtré et séché sous vide à environ 40°C. On obtient 100 g de poly($\alpha$-méthylstyrène), soit un rendement de 91%.

La masse molaire moyenne en nombre (Mn) est exprimée en équivalent polystyrène

- Masse molaire moyenne en nombre (Mn) (en $g.mol^{-1}$)= 330 000 ;
- Indice de polydispersité = 1,05.

EXEMPLE 4.

Cet exemple illustre la préparation de poly($\alpha$-méthylstyrène) ayant une masse molaire en nombre de 390 000 $g.mol^{-1}$ et un indice de polydispersité proche de 1.

Dans un réacteur spécifique de 1500 mL relié à un cryostat équipé d'une cellule UV, sont introduits sous argon, du toluène anhydre (550 mL) et le monomère $\alpha$-méthylstyrène (220 g). La phase de neutralisation suivie grâce à la cellule UV est alors effectuée à température ambiante en ajoutant goutte à goutte du s-BuLi. Lorsque la neutralisation est atteinte, une légère coloration jaune est obtenue et l'absorption UV est stable. Le milieu réactionnel est alors placé à -25°C. La quantité théorique de s-BuLi ($5,5*10^{-4}$ mol) nécessaire à l'obtention du polymère visé est ajoutée. Après agitation à cette température pendant 4 heures, le solvant polaire aprotique, le tétrahydrofuranne anhydre (100 mL) est additionné. Le milieu réactionnel devient alors rouge intense. Après agitation pendant 24 heures à -25°C, la solution devient visqueuse. Après consommation totale du monomère, on stoppe la polymérisation en désactivant les sites anioniques, on ajoute 6 mL d'alcool anhydre à basse température et on laisse revenir le mélange à température ambiante. Le mélange est coulé lentement dans le méthanol. Le polymère obtenu est filtré et séché sous vide à environ 40°C. On obtient 190 g de poly($\alpha$-méthylstyrène), soit un rendement de 90%.

La masse molaire moyenne en nombre (Mn) est exprimée en équivalent polystyrène.

- Masse molaire moyenne en nombre (Mn) (en $g.mol^{-1}$)= 390 000 ;
- Indice de polydispersité = 1,05.

## Revendications

**1.** Procédé de préparation d'un polymère poly($\alpha$-méthylstyrène) par polymérisation anionique du monomère $\alpha$-méthylstyrène, ledit procédé comprenant successivement les étapes suivantes :

a) une étape de préparation d'une solution comprenant le monomère $\alpha$-méthylstyrène et un solvant apolaire aprotique ;

b) une étape de neutralisation de la solution préparée en a) comprenant l'ajout à cette solution d'un quantité efficace d'au moins un amorceur organométallique monofonctionnel, de manière à neutraliser les sources

protiques de la solution préparée en a);
c) une étape de refroidissement de la solution obtenue en b) à une température inférieure à 0°C ;
d) une étape d'amorçage de la polymérisation comprenant l'ajout à la solution refroidie obtenue en c) d'une quantité prédéterminée dudit amorceur organométallique monofonctionnel ;
e) une étape de propagation de la polymérisation comprenant l'addition à la solution obtenue en d) d'un solvant polaire aprotique, ledit solvant polaire aprotique étant ajouté en une quantité inférieure à celle du solvant apolaire aprotique;
f) une étape de terminaison comprenant l'ajout à la solution obtenue en e) d'un solvant polaire protique.

**2.** Procédé selon la revendication 1, dans lequel le solvant apolaire aprotique est choisi dans le groupe constitué par les hydrocarbures aromatiques comportant de 6 à 10 atomes de carbone, les hydrocarbures aliphatiques.

**3.** Procédé selon la revendication 1 ou 2, dans lequel le solvant apolaire aprotique est le toluène.

**4.** Procédé selon l'une quelconque des revendications 1 à 3, dans lequel l'amorceur organométallique monofonctionnel est un composé organolithien.

**5.** Procédé selon la revendication 4, dans lequel le composé organolithien est choisi dans le groupe constitué par le n-butyllithium, le sec-butyllithium, le tert-butyllithium.

**6.** Procédé selon l'une quelconque des revendications 1 à 5, dans lequel l'étape de neutralisation b) est suivie au moyen d'une cellule UV.

**7.** Procédé selon l'une quelconque des revendications 1 à 6, dans lequel l'étape de préparation a), l'étape de neutralisation b), sont réalisées à température ambiante.

**8.** Procédé selon l'une quelconque des revendications 1 à 7, dans lequel l'étape de refroidissement consiste à refroidir la solution obtenue en b) à une température allant de -50 à -10°C, de préférence, allant de -50 à -25°C.

**9.** Procédé selon l'une quelconque des revendications 1 à 8, dans lequel le solvant polaire aprotique est choisi dans le groupe constitué par le tétrahydrofuranne, le tétrahydropyranne.

**10.** Procédé selon la revendication 9, dans lequel le solvant polaire aprotique est le tétrahydrofuranne.

**11.** Procédé selon l'une quelconque des revendications 1 à 10, dans lequel l'étape de préparation a), l'étape de neutralisation b), l'étape d'amorçage d) et l'étape de propagation e) sont réalisées sous atmosphère de gaz inerte.

**12.** Procédé selon l'une quelconque des revendications 1 à 11, comprenant, en outre, après l'étape de terminaison f), une étape d'isolement du poly($\alpha$-méthylstyrène).

**13.** Procédé selon la revendication 12, dans lequel l'étape d'isolement du poly($\alpha$-méthylstyrène) s'effectue par coulée dans du méthanol du mélange réactionnel résultant de l'étape f), suivie d'une filtration et d'un séchage du poly($\alpha$-méthylstyrène) obtenu.

## Claims

**1.** A process for the preparation of a poly($\alpha$-methylstyrene) polymer by anionic polymerization of the $\alpha$-methylstyrene monomer, said process successively comprising the following stages:

a) a stage of preparation of a solution comprising the $\alpha$-methylstyrene monomer and a nonpolar aprotic solvent;
b) a stage of neutralization of the solution prepared in a) comprising the addition, to this solution, of an effective amount of at least one monofunctional organometallic initiator, so as to neutralize the proton sources of the solution prepared in a);
c) a stage of cooling the solution obtained in b) to a temperature of less than 0°C;
d) a stage of initiation of the polymerization comprising the addition, to the cooled solution obtained in c), of a predetermined amount of said monofunctional organometallic initiator;
e) a stage of propagation of the polymerization comprising the addition, to the solution obtained in d), of a polar

aprotic solvent, said polar aprotic solvent being added in an amount which is lower than that of the nonpolar aprotic solvent;
f) a stage of termination comprising the addition, to the solution obtained in e), of a polar protic solvent.

**2.** The process as claimed in claim 1, in which the nonpolar aprotic solvent is chosen from the group consisting of aromatic hydrocarbons comprising from 6 to 10 carbon atoms and aliphatic hydrocarbons.

**3.** The process as claimed in claim 1 or 2, in which the nonpolar aprotic solvent is toluene.

**4.** The process as claimed in any one of claims 1 to 3, in which the monofunctional organometallic initiator is an organolithium compound.

**5.** The process as claimed in claim 4, in which the organolithium compound is chosen from the group consisting of n-butyllithium, sec-butyllithium and tert-butyllithium.

**6.** The process as claimed in any one of claims 1 to 5, in which the neutralization stage b) is monitored using a UV cell.

**7.** The process as claimed in any one of claims 1 to 6, in which the preparation stage a) and the neutralization stage b) are carried out at ambient temperature.

**8.** The process as claimed in any one of claims 1 to 7, in which the cooling stage consists in cooling the solution obtained in b) to a temperature ranging from -50 to -10°C, preferably ranging from -50 to -25°C.

**9.** The process as claimed in any one of claims 1 to 8, in which the polar aprotic solvent is chosen from the group consisting of tetrahydrofuran and tetrahydropyran.

**10.** The process as claimed in claim 9, in which the polar aprotic solvent is tetrahydrofuran.

**11.** The process as claimed in any one of claims 1 to 10, in which the preparation stage a), the neutralization stage b), the initiation stage d) and the propagation stage e) are carried out under an inert gas atmosphere.

**12.** The process as claimed in any one of claims 1 to 11, additionally comprising, after the termination stage f), a stage of isolation of the poly(α-methylstyrene).

**13.** The process as claimed in claim 12, in which the stage of isolation of the poly(α-methylstyrene) is carried out by running the reaction mixture resulting from stage f) into methanol, followed by filtering off and drying the poly(α-methylstyrene) obtained.

## Patentansprüche

**1.** Verfahren zur Herstellung eines Polymers Poly(α-methylstyrol) durch anionische Polymerisation des Monomers α-Methylstyrol, wobei das Verfahren die nachstehend angegebenen aufeinanderfolgenden Stufen umfasst:

a) die Herstellung einer Lösung, die das Monomer α-Methylstyrol und ein aprotisches apolares Lösungsmittel enthält;
b) die Neutralisation der in der Stufe (a) hergestellten Lösung, die umfasst die Zugabe einer wirksamen Menge mindestens eines monofunktionellen metallorganischen Initiators (Starters) zu dieser Lösung, um so die Wasserstoffquellen der in der Stufe (a) hergestellten Lösung zu neutralisieren;
c) das Abkühlen der in der Stufe (b) erhaltenen Lösung auf eine Temperatur von unter 0 °C;
(d) das Initiieren der Polymerisation durch Zugabe einer vorgegebenen Menge des monofunktionellen metallorganischen Initiators zu der in der Stufe (c) erhaltenen abgekühlten Lösung;
(e) das Fortsetzen der Polymerisation durch Zugabe eines aprotischen polaren Lösungsmittels zu der in der Stufe (d) erhaltenen Lösung, wobei das aprotische polare Lösungsmittel in einer Menge zugegeben wird, die niedriger ist als diejenige des aprotischen apolaren Lösungsmittels; und
(f) die Beendigung der Polymerisation durch Zugabe eines protischen polaren Lösungsmittels zu der in der Stufe (e) erhaltenen Lösung.

**2.** Verfahren nach Anspruch 1, bei dem das aprotische apolare Lösungsmittel ausgewählt wird aus der Gruppe, die besteht aus aromatischen Kohlenwasserstoffen mit 6 bis 10 Kohlenstoffatomen und aliphatischen Kohlenwasserstoffen.

**3.** Verfahren nach Anspruch 1 oder 2, bei dem als aprotisches apolares Lösungsmittel Toluol verwendet wird.

**4.** Verfahren nach einem der Ansprüche 1 bis 3, bei dem als monofunktioneller metallorganischer Initiator eine Organolithium-Verbindung verwendet wird.

**5.** Verfahren nach Anspruch 4, bei dem die Organolithium-Verbindung ausgewählt wird aus der Gruppe, die besteht aus n-Butyllithium, sec-Butyllithium und tert-Butyllithium.

**6.** Verfahren nach einem der Ansprüche 1 bis 5, bei dem die Neutralisation in der Stufe (b) mittels einer UV-Zelle verfolgt wird.

**7.** Verfahren nach einem der Ansprüche 1 bis 6, bei dem die Herstellungsstufe (a) und die Neutralisationsstufe (b) bei Umgebungstemperatur durchgeführt werden.

**8.** Verfahren nach einem der Ansprüche 1 bis 7, bei dem die Abkühlungssstufe darin besteht, dass man die in der Stufe (b) erhaltene Lösung auf eine Temperatur von -50 bis -10 °C, vorzugsweise von -50 bis -25 °C, abkühlt.

**9.** Verfahren nach einem der Ansprüche 1 bis 8, bei dem das aprotische polare Lösungsmittel ausgewählt wird aus der Gruppe, die besteht aus Tetrahydrofuran und Tetrahydropyran.

**10.** Verfahren nach Anspruch 9, bei dem als aprotisches polares Lösungsmittel Tetrahydrofuran verwendet wird.

**11.** Verfahren nach einem der Ansprüche 1 bis 10, bei dem die Herstellungsstufe (a), die Neutralisationsstufe (b), die Initiierungsstufe (d) und die Fortsetzungsstufe (e) in einer inerten Atmosphäre durchgeführt werden.

**12.** Verfahren nach einem der Ansprüche 1 bis 11, das außerdem nach der Stufe der Beendigung der Polymerisation (f) eine Stufe zur Abtrennung (Isolierung) von Poly($\alpha$-methylstyrol) umfasst.

**13.** Verfahren nach Anspruch 12, bei dem die Stufe zur Abtrennung (Isolierung) von Poly($\alpha$-methylstyrol) durchgeführt wird, indem man die in der Stufe (f) erhaltene Reaktionsmischung in Methanol gießt und anschließend das Poly($\alpha$-methylstyrol) abfiltriert und trocknet.